Europäisches Patentamt

European Patent Office

Office européen des brevets

(11) Numéro de publication: **0 498 085 A1**

# DEMANDE DE BREVET EUROPEEN

(21) Numéro de dépôt: **91200277.1**

(22) Date de dépôt: **08.02.91**

(51) Int. Cl.⁵: **B01D 35/06**

(43) Date de publication de la demande:
**12.08.92 Bulletin 92/33**

(84) Etats contractants désignés:
**AT BE CH DE DK ES FR GB GR IT LI LU NL SE**

(71) Demandeur: **Dall'Angelo, Daniele**
**Via S.Vittore 23/4**
**I-20020 Lainate (Milano)(IT)**

(72) Inventeur: **Dall'Angelo, Daniele**
**Via S.Vittore 23/4**
**I-20020 Lainate (Milano)(IT)**

(54) **Filtre mécanique et magnétique combiné pour liquides.**

(57) Filtre pour liquides aqueux ou dérivés liquides du pétrole, comportant un corps magnétique disposé à l'intérieur d'un élément filtrant. L'élément filtrant, étant aménagé à l'intérieur d'une enveloppe, est parcouru par le liquide à filtrer de l'extérieur vers l'intérieur.

Fig.1

## RESUME

La presente decouverte a comme object une corp filtre et une structure interne capable de reduire les incrustation du au calcaire et sable presente dans les eaux,et capable d'emeliorer le proprietedes produits derive du petrole comme gasoil,essence,napthe en travaillent sur la robture de la cheine du carbon.

Caracterisation du filtre est d'avoire a son interieur une cartouche filtrante les fluides et une pile magnetique perfectione en fonction des fluides a traiter,avec la possibilite d'utiliser plus direction et plus entre et sortie,en fonction de ca cavite axia le. La suindicate cavite est en comunication avec un premiere et un deuxieme embouchure de sortie angolarment facette et selectivement utilisable. L'entrevous est in comunication avec un premiere et une deuxieme embouche d'entre angolierment facette et selectivement utilisable. Dans le cavite est prevu une corp magnetique que va a interragir avec le fluide soit internement,soit exste rnement a la cartouche filtrante,comme accelerateur des ions.

## DESCRIPTION

Il present decouvert a comme but un corp filtre antisable et anticalcaire et fevorisant le nebulisation anticalcaire sur les eaux,et favorisant la nebulisation et combustion sur les derive du petrole,en aval de ca installation.

Est connu que l'usage de filtre de type traditionelle pour la depuretion de l'eau de les soubstance en soubspension comme sable et soustance similaire il cree normalment des indesidere incrustetion du a la presence dans l'eau de sel de Magnesiom et Calciom comunemente denomine calcaire( CaCo₃).

Pour eviter cet inconveniente on utilisent normalment des filtre dechangeur de ION o de sel de POLIPHOSFATE que malereusement producent une modification chimique et organolectique de l'eau traite que la rendent pas potable o a retraiter pour ce potabilite.

En plus l'utilisation des resin et sel de posphate demande des coutoses intervention d'entretien.

Dans le cas de derive du petrole les filtres on la fonction de filtrage des gros corpcuspule des fluides/.

Le but de cette decouverte est l'elimination des incovenient descrive,evec la realisation d'un filtre a structure perfectione avec des enbouche dispose en plus direction ici a rendre notevolment plus semplifie ca utilisation.

Le susdit filtre magnetique que impeche les depots de calcaire sans apportaire modification fisique et chimique de l'eau traite et sans alterer le PH et l'organilecticite de l'eau est capable d'apportaire une modification structurel de le molecule de CaCo₃,calcaire en passent de la structure Calcite,incrustant a la structure Aragonite pas incrustant,touyour calcaire me pas incrustant.

Dans le cas des fluides derivates du petrole l'ensamble des deux phases,filtrage et magnetisation provoque une emelioration de la nebulisation des fluides dans la chambre a chaleur et par consequence une meilleure combustion de la flamme,et une mineure incrustation interne des chaudiere et de la tete du piston dans le cas d'utilisation sur gasoil pour automobiles.

En plus le filtre magnetique en object est facilment obtenible evec pieces et materiels comunement en commerce et pourtant il resulte competitif du point de vue economique.

Le tache su expose et les butes mentione mieux evidencie en suite il viennent rejoindre avec un corp filtre anticorpuscule magnetique capable de reduire les incru station de calcaire,et d'emeliorer la nebulisation en cas de derive du petrole en aval de ca installation suivant le decouverte caracterise du fait de comprendre une cartouche filtrente,avec une cavite axiale et louable dans une involucre externe in cooperation avec le le quel forment une intercapedine;la suindiche cavite est en comunication avec le prime et seconde enbouche engolarment facette et selectivement utilisebles;dans la cavite est prevu une corp magnetique structure a pile magnetique interagisessant avec le fluide internement et esternement a la cartouche filtrante.

Ulterieur caracteristique et vantage du decouvert resuteron mieux evidencie avec une exame de la description d'un filtre adapte a reduire les incrustations calcarees ,et a emeliorer les nebulisations des fluides en aval de ca installation,inlustrate a titre indicative me pas limitative avec l'aide de de dessin allie:

La figure 1 represente chematiquement in section le corp du filtre;

La figure 2 represente,le corp filtre en section avec different dispositive magnetique;

La figure 3 represente la cartouche filtrente,avec posi tione a l'interieure la pile magnetique;

Les figures 4,5,6,et 7 inlustent diverses disposition schematique des embouches d'entre et sortie,obtenible avec le corp du filtre.

Avec particuliere refer aux sᵐbole numerique des figures,le corp du filtre magnetique suivant le decouvert il vien endique dan la globalite avec le n° de ref. 1, il presente une cartouche filtrante 2,que en corrispondence de la paroie laterel est provise de une pluralite des trous pertuis 3,que sont esternement revete d'une chemise 4,que realise le strate filtrante.

La paroie 3 est constituit de une filet a maille de fin epesseur que peut etre realise en materiel plastique, en naylon,en acier,et acier inox eo en materiel adapte au cas;le strate filtrante4,est d'avantage realize en etoffe o en ceramique o en eutres materiels adapte a traiter les particules dans les fluides a partire da 0,1 microns jusque a 200 microns,com sable,pudre,oxide de fer,substance organique et inorganique en subspension dans les fluides a traiter.

La cartouche filtrante est ferme a cote,avec une fond 7 et presente a son interieur une cavite cilindrique 8. La cartouche filtrante est loue dans un envelop externe 9,que forment en cooperation avec la cartouche meme une entrevous 10,que en pratique,enveloppe la cartouche fil trante.

Une importante peculariete du decouverte est constituit du fait que l'entrevous 10,presente une petit chapeau 11,avec un premiere embouche de sortie,12,dispose axielmente respect a la cavite et en comunication avec la meme,et un seconde embouchede sortie 13,dispose ortogonalment,en respectau premiere emboucheen comunication avec la cavite interne.

En plus sur le petit chapeau 11,est prevu un seconde embouche d'entre 15,dispose en allineement geometrique avec l'embouche de sortie 12,et en comunication avec entrevous 10,la quelle resulte aussi en comunica tion avec le prime embouche d'entre 16,qui est dispose axielment,en respect a la cartouche,en resultant comsa ortogonale en respect,au seconde embouche d'entre15

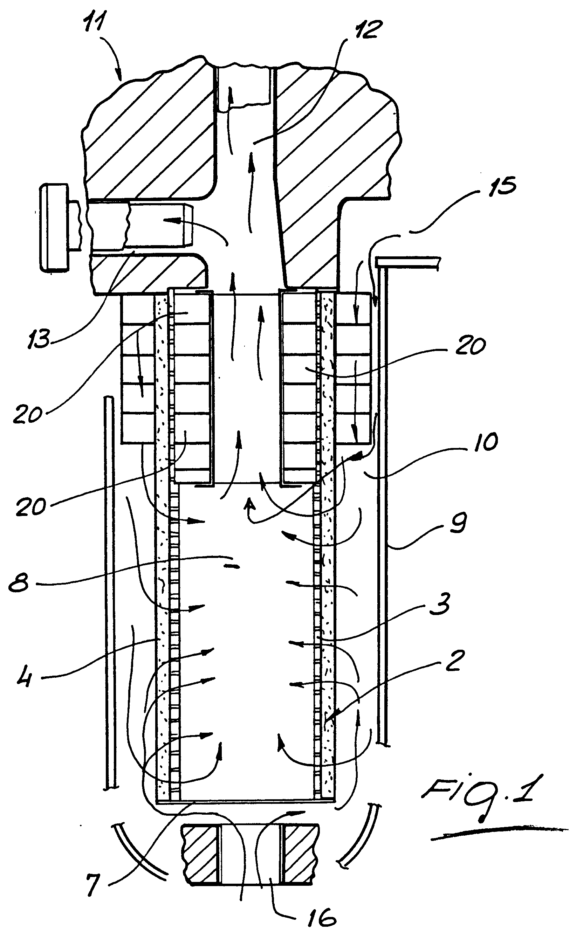

A l'interieur de la cartouche ou a l'esterieur en forme coaxial est prevu un dispositive magnetique,que, com schematiquement inlustrate dans la figure 1,il peut etre constituit par une pluralite des anneaux magnetique 20,avec domein magnetique en repulsion ici d'obtenir par sommatorie plusieurs domeine magnetique et en plus cel de fermature.

Les single anneaux sont protege par une couche de peinture epoxipoliester bicomponent,adapte pour les contact avec l'eau ,l'eau potable,et le derive du petrol Et le college etait fait avec des resins adapte a l'u sage.La pile est provise d'un supporte interieur de laiton amagnetique de fin epesseur environ 0,1mm avec le but de laisser des joux entre les anneaux e tenir l'ensemble dans une pechet complet,eutrs motivation est eviter le zero des diverses domeine magnetique de la pile.Cet pile a fonction d'accelerateur des ions.

A noter que les lignes de force du domein magnetique s'ecartent reciproquement denotend la reciproque repulsion,du mod que les ligne de force sortent du corp magnetique,et encore le domeine ou spectre alleront a interesser les Fluid,soit internement soit externement a la cartouche filtrante.

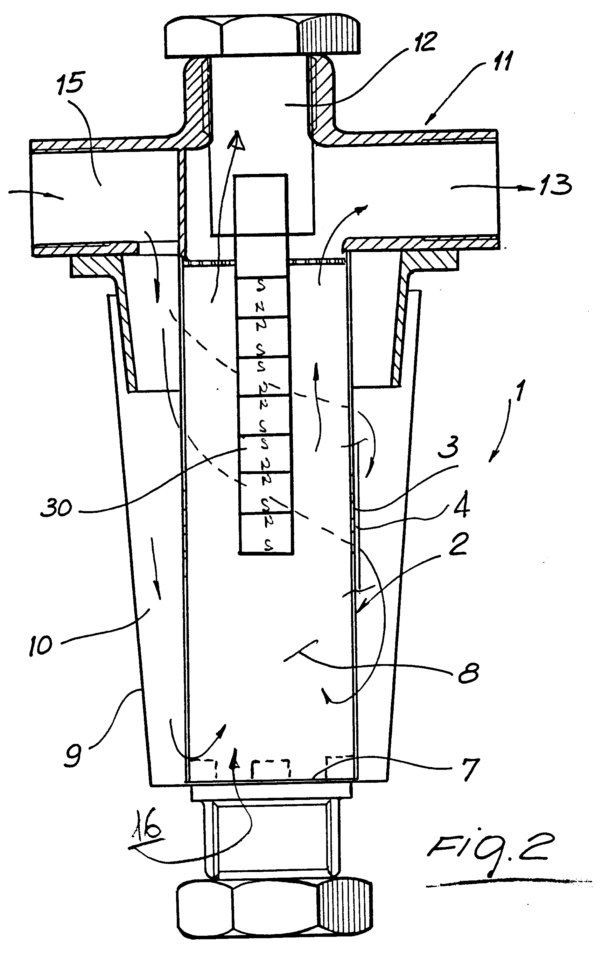

Comment inlustrait dan la figure 2,le corp magnetique 30 est constituit par une barrette a section rectangulie re eo ronde eo carre elle meme avec plus section magnetise,dispose avec polarite egal e sur le meme face en repulsion.

L'englobement coaxiale de la cartouche filtrante et de la pile magnetique eo barrete magnetique sont resoudre avec des sistemes mecanique adapte a la protexion des materiels magnetique par rapport aux fluides a traiter.

Meme dan cet ces les lignees de force se ecartent a alternativement,a cause de la repulsion reciproque et creent des lignes de force sortent de le barrette magnetique que interessent le fluides avant e apre la filtration.

L'application d'un domeine magnetique dans le filtre est tres importante puisque un cristal est constituit par un ensemble tridimensionel periodique de ION,ATOM et MOLECULE;les cristals sont classifie par group de sistemes et classes en fonction de la simmetrie,on obtien en pratique une structure polimirphe,cet a dir une substance que sans variation de le phormule chimique el admetent l'existence d'un o plus phases o modification,gracies a l'accelerations des ions.

Un eutres phorme des cristalls est l'isophormie que on a lorsque les substance on des analogies de composition chimique et de structure cristalline,cet a dire quand risultent constituit de ATOM et ION avec rajon e polizarisation analogue;le carbonate de calcio cet a dire le calcaire $CaCo_3$,il a rajon atomique de 0,99Å il est a la limite de la sobstituibilite isomorphe et il passe avec facilite da un type de structure a l'eutre,(Calcite incrustant-domeine magnetique-Aragonite pas incrustent. Dans le cas des derivates du petrole on travaille sur la cheine du carbon,le domeine magnetique casse le cheine du carbon provoquent une emelioration de la nebulisation par injecteur et consequente meilleur combustion dans la chambre chaleur.

La trasformation de Calcite en Aragonite ne comporte pas une modification de la phormule chimique ma unique ment une variation du reticule cristalline:c'est aspect importante den le traitement de l'eau se traduisent en la trasformation de la Calcite incrustant dan l'Aragonite pas incrustant,l'effect magnetique qui agisent sur le rajon atomique du carbonato de calcio attive nt l'effect polimorphe en portant la molecule de l'etat fisique de le Calcite a l'etat fisique de Aragonite eo witherite.

La consequence est que l'eau magnetise perdre sa capacite d'incrustation des tujautries et en plus el cree un effect de politure par strainement capable de reduire et deplacer les vieux incrustation.

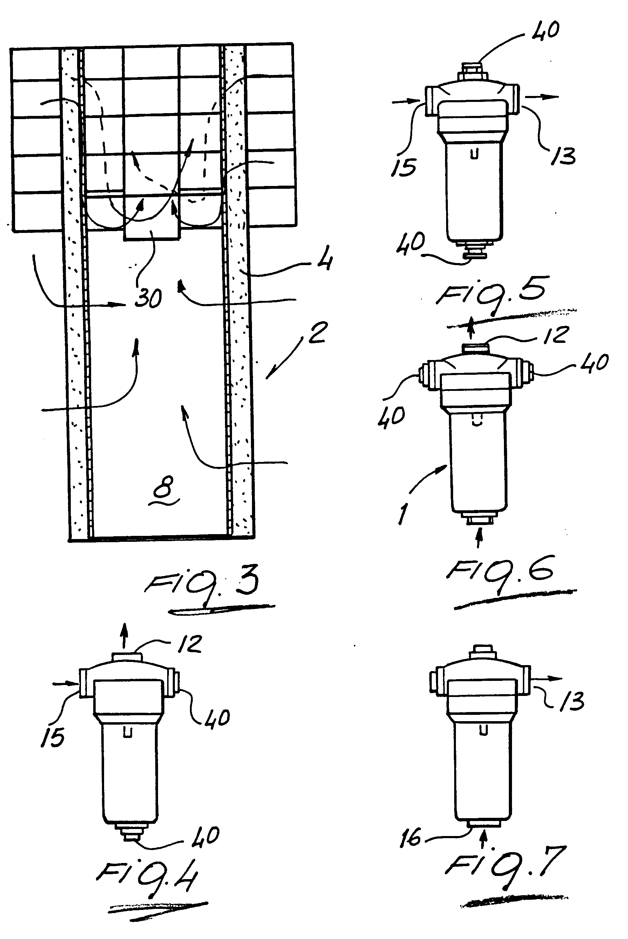

Dan les figures 4 et 7,on observe com le corp du filt re suivants le decouverte resulent pluridirectionel: en effet dan la fig.4,on voie que l'entre du fluid avvien travers le deuxieme embouche d'entre 15,et la sortie axiale a la cartouche avvien travers le premiere embouche de sortie;les eutres embouche sont ferme par de bouchon, avec indication 40.

Dan la figure 5,l'entre avvien travers le deuxieme embouche d'entre et la sortie travers le deuxieme embouche de sortie,que sont entre eux en allineement;dan la figure 6,on ha l'entree travers le premiere enbouche d'entre et la sortie avec le premiere embouche de sortie;dan la figure 7,le fluide entre travers le premiere embouche d'entre en sourtant travers le deuxieme embouche de sortie.

Avec cet description on peut voire com le decouverte rejoindre le but propose.(une entre ,quatre sortie)

Dan le particulaire on desider suloigner l'effait que le corp du filtre suivants le decouverte il presente une majeur fonctionalite et praticite d'utilisation et en plus il-ya la caracteristique du domein magnetique a son interieur,unitement a l'effait d'obtenir une pluridiretionalite,par cet qui concerne les embouches d'entre et les embouches des sortie.

Toutes les detailles peut etre sobstituit da eutres elementes,tecniquementes equivalentes.

Dans la pratique,les materiels emploaye,pourvu que compatible avec l'usage specifique,non que les dimensions et les formes contingente,peut etre quelconque suivantes les esigences de productions et du marchet.

**Revendications**

1. Corp filtre anticorpcupscule et anticalcaire capable dempecher et reduire les incrustation de calcaire et emeliorer la nebulisation dan le produits derive du petrole;en aval de ca installation,caracterize du fait de comprendre une cartouche filtrante,avec une cavite axialeet loue dans un enveloppe externe,in cooperation avec le quel il forme une entrevous;la cavite est in comunication avec un prime et seconde embouche de sortie angolerment sfausse et selectivement utilisable; L'entrevous est en comunication avec le prime et seconde embouche d'entre,angolerment sfausse et selectivement utilisable;dans la cavite est prevu un group magnetique,que agissent avec le fluides a l'interieur et a l'esterieur de la cartouche filtrante.

2. corp du filtre,suivante la rivendication precedent ,caracterise du fait que la cartouche filtrante el present un corp cilindrique cave,ferme dans une extremite axiale et avec sur la paroie laterel un pluralite de trou libre;la paroi normalment circuliere est reveti de une couche,o epesseur filtrant,capable de retenir les particules en subspension dans les fluides type sable,pudre,oxide,et substance organique et inorganique a partir d'environ 0,1 micron a 200 microns.

3. Corp filtre,suivantes les rivendications precedentment esplique caracterise du fait que le corp magnetique axiel est constituit par une pile des anneaux de materiel magnetique a choisir suivantes les cas en examen et eventuelment de barret ou les differentes domeine sont cree par polarite,en repulsion reciproque,et les lignee des forces sortent agissent sur les fluides soit a l'interieur soit a l'exterieur de la cavite ou les fluides sont oblige a passer avant de sortir du corp du filtre.,apres l'accelerations des ions.

4. Corp filtre,suivantes une o plus rivendications deya indiquet,caracterise du fait que les anneuaux magneti que et la barre magnetique sont protege da les fluides par une couches de materiel epoxipoliester bi component ou eutres protexion adapte au cas en examen avec une support interieur dans le cas des anneaux,en laiton de fin epesseur avec le but de garder ensemble le pachet pile magnetique et de lasser un minimon de jeux entre les anneaux.

5. Corp filtre suivantes precedentes rivendications ou le corp magnetique est constituit par une barre,ronde ou carre,ou rettanguliere,d'un sol corp ou les differentes domeine magnetique sont obtenu par machine de magnetisation avec polarite en contrapposition pour generer des lignes des forces sortent,capable d'interesser les fluides a traiter soit a l'interne de la cartouche filtrant soit a l'esterne.

6. Corp filtre suivantes rivendications ou la barre en materiel magnetique est supporte da une structure en materiel plastique eo eutres materiel adapte a l'estre mite de la cartouche filtrante eo sur la tete du filtre,eutres poit de suspension sont a etudier suivant les cas en examen.

7. Corp suivantes rivendications ou le media de filtration est realise en,tissu de poliester,eo de polipropilen,eo fils,eo farine fossile,eo carbon active,eo rets de nylon,eo rets de acier,acier inox,et toutes les sistemes adapte a la filtration des fluides.

8. Corp filtre suivantes rivendications caracterise du fait que les embouches d'entree et sortie pas utilise sont amovible et fermee avec des bouchon.

9. Corp filtre anticorpuscule magnetique avec com but la reduction et l'empechement de formation des incrustation de calcaire,et emelioration de la nebulisation de produit derive du petrole en aval de ca installation suivantes une ou plus rivendications precedent le tout plus descript et inlustrait pour le but specifique.

Fig.1

Fig.2

Fig. 3

Fig. 4

Fig. 5

Fig. 6

Fig. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 026 805 (L.L. FOWLER) | 1-3,6,7, 9 | B01D35/06 |
| Y | * colonne 2 - colonne 6 * | 4 | |
| | --- | | |
| X | DE-A-1 064 668 (R. BOSCH) | 1,2,5-7, 9 | |
| Y | * colonne 1 - colonne 4 * | 4 | |
| | --- | | |
| X | US-A-2 795 333 (W.V. KENNEDY) | 1,2,5,7, 9 | |
| Y | * colonne 1 - colonne 4 * | 4 | |
| | --- | | |
| X | FR-A-1 453 178 (A. TEVES MASCHINEN- UND ARMATURENFABRIK) | 1,2,7 | |
| Y | * page 1 - page 3 * | 4 | |
| | --- | | |
| Y | US-A-4 067 810 (D.W. SULLIVAN) * colonne 8, ligne 40 - colonne 9, ligne 13 * | 4 | |
| | ----- | | |

**DOMAINES TECHNIQUES RECHERCHES (Int. Cl.5)**

B01D

Le présent rapport a été établi pour toutes les revendications

| Lieu de la recherche | Date d'achèvement de la recherche | Examinateur |
|---|---|---|
| LA HAYE | 11 OCTOBRE 1991 | DE PAEPE P.F.J. |